# EUROPÄISCHE PATENTSCHRIFT

(11) **EP 3 418 086 B1**
(45) Veröffentlichungstag und Bekanntmachung des Hinweises auf die Patenterteilung: **17.03.2021**
(21) Anmeldenummer: 18179305.0
(22) Anmeldetag: 22.06.2018
(51) Int. Cl.: B60G 9/00, B60B 35/00

(54) **LÄNGSLENKEREINHEIT, ACHSKÖRPER UND ACHSANBINDUNG, INSBESONDERE FÜR NUTZFAHRZEUGE**
LONGITUDINAL ARM UNIT, AXLE BODY AND AXLE ATTACHMENT, IN PARTICULAR FOR COMMERCIAL VEHICLES
UNITÉ DE BRAS OSCILLANT LONGITUDINAL, CORPS D'ESSIEU ET RACCORDEMENT D'ESSIEU, EN PARTICULIER POUR VÉHICULES UTILITAIRES

(30) Priorität: 23.06.2017 DE 102017113922
(43) Veröffentlichungstag der Anmeldung: 26.12.2018
(73) Patentinhaber: SAF-HOLLAND GmbH, 63856 Bessenbach (DE)
(72) Erfinder: Nagel, Christopher, 63762 Großostheim (DE)
(74) Vertreter: Müller Schupfner & Partner Patent- und Rechtsanwaltspartnerschaft mbB

(56) Entgegenhaltungen:
- EP-A1- 2 844 499
- WO-A2-2014/142657
- DE-A1-102011 079 979
- DE-A1-102012 024 941

## Beschreibung

Die vorliegende Erfindung betrifft eine Längslenkereinheit und eine Achsanbindung mit entsprechender Längslenkereinheit, insbesondere für Nutzfahrzeuge.

Achsanbindungen sind aus dem Stand der Technik bereits bekannt und betreffen in der Regel den Bereich, in welchem eine Achse eines Kraft- oder Nutzfahrzeuges an dessen Fahrzeugrahmen direkt oder mittelbar, über beispielsweise einen Führungslenker, festgelegt ist. Verbreitet ist in diesem Zusammenhang die Ausführung der Achsanbindung mittels U-förmiger Befestigungselemente mit rundem Querschnitt, welcher an ihren Enden jeweils Außengewinde aufweisen und die Achse beispielsweise gegen den Führungslenker oder eine Blattfedereinheit verspannen. In diesem Fall ist das Achsrohr mit dem Führungslenker oder an der Blattfedereinheit stoffschlüssig verbunden. Ferner ist eine Befestigung eines zweigeteilten Längslenkers bekannt, welcher mithilfe von Verschraubungen um ein Vierkant-Achsrohr gespannt ist. Nachteilig bei den bekannten Achsanbindungen ist, dass die Berührungsfläche zwischen Achse und Befestigungselement, welche zu einem Kraftschluss der Achsanbindung beiträgt, sehr klein ist, und die auftretenden Kräfte überwiegend an vereinzelten Stellen der Achsanbindung auftreten, wodurch insbesondere das Achsrohr hohen Belastungen standzuhalten hat.

Die EP 2844 499 A1 befasst sich mit einer Achsanbindung mit einem Lenkerelement und einem Spannelement.

Die WO 2014/142657 A2 offenbart eine Achsaufhängung mit einer rechteckigen Achse.

Die DE 10 2012 024 941 A1 befasst sich mit einer Vorrichtung zur Verbindung eines Achskörpers einer Radachse mit einem Achskörper, wobei die Vorrichtung einen Achslappen und einen Lenker aufweist, wobei der Lenker und der Achskörper über Zugstangen miteinander verspannt sind.

Die DE 10 2011 079 979 A1 befasst sich mit einer Verbundlenkerachse für eine Radaufhängung eines Kraftfahrzeugs.

Es ist Aufgabe der vorliegenden Erfindung, eine Längslenkereinheit, einen Achskörper sowie eine Achsanbindung bereitzustellen, welche im montierten Zustand eine gleichmäßigere Momentenverteilung aufweist, so dass die Belastung der einzelnen Komponenten, insbesondere des Achsrohres, optimiert bzw. reduziert ist. Diese Aufgabe wird gelöst mit einer Längslenkereinheit gemäß dem unabhängigen Anspruch 1 und mit einer Achsanbindung gemäß Anspruch 9. Weitere Vorteile und Merkmale der vorliegenden Erfindung ergeben sich aus den weiteren abhängigen Ansprüchen.

Erfindungsgemäß ist ein Lenkerelement bzw. eine Längslenkereinheit, insbesondere für Nutzfahrzeuge, mit einer Aufnahmeeinheit vorgesehen. Die Längslenkereinheit weist einen gekrümmten lenkerseitigen Anbindungsbereich und, an einen den lenkerseitigen Anbindungsbereich grenzend, einen lenkerseitigen Befestigungsbereich auf. Die Aufnahmeeinheit ist zweckmäßigerweise ein von der Längslenkereinheit separates bzw. trennbares Element ausgebildet und weist ferner einen gekrümmten aufnahmeseitigen Anbindungsbereich auf, welcher in einem montierten Zustand dem lenkerseitigen Anbindungsbereich gegenüberliegend angeordnet oder anordenbar ist, und an dem aufnahmeseitigen Anbindungsbereich grenzend einen aufnahmeseitigen Befestigungsbereich aufweist. Ferner ist ein Befestigungsmittel vorgesehen, welches ausgelegt ist, in einem montierten Zustand je in einen lenkerseitigen und einen gegenüberliegenden aufnahmeseitigen Befestigungsbereich wenigstens teilweise, insbesondere wieder lösbar, einzugreifen, wobei der lenkerseitige und der gegenüberliegende aufnahmeseitige Anbindungsbereich jeweils eine Kontur zum formschlüssigen Festlegen einer Achse aufweisen. In anderen Worten sind der Anbindungsbereich der Längslenkereinheit und der Anbindungsbereich der Aufnahmeeinheit derart ausgestaltet, dass jeder (beide) dieser Anbindungsbereiche eine Kontur zum formschlüssigen Festlegen der Achse aufweist. Diese Konturen sind vorteilhafterweise derart gestaltet, dass diese Konturen möglichst einen stetigen Verlauf aufweisen, somit insbesondere keine Verzahnungen, insbesondere im µm-Bereich, oder dergleichen um die formschlüssige Anordnung zu erreichen. Der Begriff "gegenüberliegend" bezieht sich vorliegend auf den montierten Zustand der Aufnahmeeinheit mit der Längslenkereinheit, bei dem der lenkerseitige und der aufnahmeseitige Befestigungsbereich sich teilweise berühren oder benachbart zueinander sind während der lenkerseitige und der aufnahmeseitige Anbindungsbereich beabstandet zueinander sind, um einen Achskörper dazwischen aufzunehmen. Die jeweilige Kontur des lenkerseitigen und des gegenüberliegenden aufnahmeseitigen Anbindungsbereichs liegen im montierten Zustand teilweise, insbesondere überwiegend, formschlüssig an einer Achse an. Im montierten Zustand, ist eine Achse zwischen dem lenkerseitigen und dem gegenüberliegenden aufnahmeseitigen Anbindungsbereich festgelegt, indem der lenkerseitige und der aufnahmeseitige Anbindungsbereich teilweise flächig, insbesondere zu mehr als 50%, vorzugsweise mehr als 80%, an einem Umriss bzw. Umfang der Achse anliegen. Die vorgeschlagene Längslenkereinheit ist vorteilhafter Weise derart ausgelegt, dass sie in einem montierten Zustand eine Achse überwiegend, insbesondere zu mehr als 50%, vorzugsweise mehr als 80%, des Umrisses bzw. Umfangs der Achse, formschlüssig umschließt, wodurch eine gleichmäßigere Momentenverteilung erwirkt wird.

Bevorzugt ist die Kontur des aufnahmeseitigen Anbindungsbereichs anders als die Kontur des lenkerseitigen Anbindungsbereichs ausgebildet, wobei insbesondere der lenkerseitige Anbindungsbereich und der aufnahmeseitige Anbindungsbereich jeweils komplementär zu einem vieleckförmigen Umriss, insbesondere einem Umriss eines Bogenvielecks oder Gleichdicks, einer Achse ausgebildet sind. Vorliegend sind die Konturen des lenkerseitigen und aufnahmeseitigen Anbindungsbereichs nicht komplementär oder spiegelsymmetrisch oder dergleichen zueinander ausgebildet. Vielmehr weist der aufnahmeseitige Anbindungsbereich eine andere Kontur auf als der lenkerseitige Aufnahmebereich. Insbesondere ist mindestens eine Kontur derart ausgebildet, dass diese für eine Achse eine Hinterschneidung bildet, d.h. eine Achse nach einer Montage von der Kontur gehalten wird. Insbesondere ist die Kontur dabei die Kontur, welche die Außenflächen und/oder die Kraft- oder Momentenübertragungsflächen auf einer Projektionsebene bilden. Diese Projektionsebene weist dabei vorteilhafterweise eine Normale parallel zur Längserstreckungsrichtung der Achse auf.

Bevorzugt weist die gemeinsame Kontur des aufnahmeseitigen Anbindungsbereichs und die Kontur des lenkerseitigen Anbindungsbereichs ein Vieleck auf, welches n Ecken hat, wobei n eine endliche, ungerade natürliche Zahl größer oder gleich 3 ist, insbesondere ist n= 3, 5, 7, 9. Die gemeinsame Kontur des aufnahmeseitigen Anbindungsbereichs und die des lenkerseitigen Anbindungsbereichs ist dabei die gemeinsame geometrische Erscheinung der beiden Konturen. Vorteilhafterweise ist diese gemeinsame Kontur ein Reuleaux-Polygon, besonders bevorzugt ein Reuleaux-Dreieck. Hierdurch kann auf besonders einfache Weise eine sichere formschlüssige Drehmomentübertragung erreicht werden.

Bevorzugt ist/sind die Kontur des aufnahmeseitigen Anbindungsbereichs und/oder die Kontur des lenkerseitigen Anbindungsbereichs, insbesondere in einem montierten Zustand, derart ausgelegt, dass die Kontur für eine festzulegende Achse eine Hinterschneidung bildet. Insbesondere kann einer der beiden Anbindungsbereich beispielsweise zweiteilig ausgebildet und zweckmäßigerweise zueinander verlagerbar oder verschwenkbar sein, wodurch die Kontur des Anbindungsbereiches an einen Umriss der Achse anpassbar ist.

Ferner bevorzugt ist der lenkerseitige Anbindungsbereich oder der aufnahmeseitige Anbindungsbereich als Bogen ausgebildet, und der jeweils andere Anbindungsbereich entsprechend als Doppelbogen, insbesondere als gebogenes V, insbesondere zur formschlüssigen Aufnahme des Achskörpers zwischen den beiden Anbindungsbereichen, ausgebildet. Hierdurch sind die Konturen der Anbindungsbereiche an den Umriss der Achse anpassbar, wodurch eine gleichmäßigere Momentenverteilung erwirkt wird. Ein Doppelbogen kann sich insbesondere dadurch auszeichnen, dass dieser mehrere verschiedene Krümmungsradien aufweist.

Bevorzugt weist der Bogen einen Radius r1 und der Doppelbogen zwei Radien r2, r3 auf, wobei r1 ≥ r2 oder r1 ≥ r3 gilt, wobei r2 ≥ r3 gilt, und wobei insbesondere r2=r3 ist. Besonders bevorzugt sind der Bogen und der Doppelbogen mit Radien ausgebildet, welche r1= r2= r3 erfüllen. Die können insbesondere eine Achse mit einen Umriss eines Bogenvielecks oder Gleichdicks, wie einem Relaux-Dreieck, umschließen bzw. an diesem anliegen. Ferner ist es denkbar, den Bogen und den Doppelbogen mit Radien r1, r2, r3 unterschiedlicher Größe auszubilden, wodurch ein Umriss eines Vielecks des festzulegenden Achskörpers formschlüssig festlegbar ist. Insbesondere ist es denkbar den Radius r1 mindestens 1,5 bis 3 Mal so groß auszubilden wie r2 und/oder r3.

Bevorzugt liegen der Bogen und der Doppelbogen in einem montierten Zustand formschlüssig an einem vieleckförmigen Umriss eines Achskörpers an. Der vieleckförmige Umriss des Achskörpers kann beispielsweise 3, 5 oder 9 Ecken aufweisen, bevorzugt eine ungerade, endliche Zahl an Ecken. Der Bogen und der Doppelbogen können besonders einfach an einem solchen Umriss angeordnet werden. Insbesondere können die Bögen an derjenigen Seite, mit welcher sie im montierten Zustand an dem Achskörper anliegen, Ecken aufweisen oder ein wenigstens teilweise verformbares Material aufweisen, welches eine Anpassung an den Umriss des Achskörpers ermöglicht.

Die von dem Befestigungsmittel aufgebrachte Kraft im montierten Zustand des lenkerseitigen Anbindungsbereiches wirkt im Wesentlichen senkrecht zu einem Krümmungsradius des lenkerseitigen Anbindungsbereiches. Hierdurch wird ein maximaler Kraftübertrag von der Längslenkereinheit auf einen festzulegenden Achskörper erzielt.

Ferner bevorzugt ist der lenkerseitige Anbindungsbereich in Bezug auf ein Koordinatensystem konvex und/oder konkav gekrümmt und der aufnahmeseitige Anbindungsbereich in Bezug auf das Koordinatensystem entsprechend gegensätzlich, d. h. konkav und/oder konvex gekrümmt ausgebildet. Je nachdem wie das Koordinatensystem gewählt ist, ist der eine Anbindungsbereich konvex und der andere Anbindungsbereich konkav ausgebildet. Hierdurch wird erreicht, dass ein Achskörper formschlüssig von dem lenkerseitigen und dem aufnahmeseitigen Anbindungsbereich umschließbar ist.

Erfindungsgemäß umfasst die Längslenkereinheit ein zweiteiliges Lenkerelement, wobei ein, insbesondere wieder lösbare, Verbindungsmittel, insbesondere eine Bolzenverbindung oder eine U-Bügelverbindung oder eine Schraubverbindung oder eine Hakenverbindung oder dergleichen, die beiden Lenkerelemente miteinander verbindet. Zweckmäßigerweise weisen dabei beide Lenkerelemente jeweils einen Teil des längslenkerseitigen Anbindungsbereichs auf. Erfindungsgemäß ist ein erster Teil zu einem zweiten Teil des Lenkerelements gegen eine translatorische Verlagerungsbewegung durch das Verbindungsmittel gesichert, jedoch ist dabei - gleichzeitig - eine rotatorische Bewegung des ersten Teils zu dem zweiten Teil des Lenkerelements relativ zu einander, insbesondere um eine Rotationsachse, möglich. Hierdurch kann eine besonders einfache Montage erreicht werden. Vorteilhafterweise ist die Rotationsachse, um welche die rotatorische Bewegung stattfinden kann, dabei parallel zu der Längsachse der Achse orientiert. Besonders vorteilhaft ist es, um eine besonders einfache Montage zu erreichen, wenn die Kontur des längslenkerseitigen Anbindungsbereichs und/oder des aufnahmeseitigen Anbindungsbereichs symmetrisch bezüglich einer Ebene sind und die Rotationsachse, um welche die Rotationsbewegung möglich ist, in dieser Symmetrieebene liegt. Bei einer zweiteiligen Ausbildung des Längslenkerelementes können dann beispielsweise unterschiedliche Achskörper, insbesondere mit 3, oder 5 oder 7 oder 9 Ecken, mit unterschiedlichen Querschnittsflächen formschlüssig zwischen dem Längslenkerelement und dem Aufnahmeelement angeordnet werden. Die Fixierung des Achskörpers zwischen dem Längslenkerelement und dem Aufnahmeelement erfolgt mittels der Befestigungsmittel in den Befestigungsbereichen.

Weiter bevorzugt weist der lenkerseitige Befestigungsbereich wenigstens abschnittsweise eine geringere Breite auf als der aufnahmeseitige Befestigungsbereich, wobei insbesondere das Befestigungsmittel in den aufnahmeseitigen Befestigungsbereich eingreift und an mindestens einer Seite des lenkerseitigen Befestigungsbereichs anliegt. Hierdurch wird erreicht, dass die Längslenkereinheit zwischen dem Aufnahmeelement und dem mindestens einen Befestigungsmittel im montierten Zustand umgriffen ist und der lenkerseitige Befestigungsbereich und der aufnahmeseitige Befestigungsbereich mindestens teilweise aneinander liegen.

Bevorzugt weist die Längslenkereinheit und/oder das Aufnahmeelement eine Festigkeit von mindestens 1.000 N/mm² auf. Unter Festigkeit ist dabei insbesondere die Zugfestigkeit (Rₘ) zu verstehen. Besonders bevorzugt liegt diese in einem Bereich von 1.300 bis 1.600 N/mm². Die Längslenkereinheit und/oder das Aufnahmeelement weisen folglich eine hohe Festigkeit auf, so dass auftretende Momente im montierten Zustand von diesen aufgenommen werden können, ohne dass die Längslenkereinheit und/oder das Aufnahmeelement zerstört werden. Vielmehr können die Längslenkereinheit und/oder das Aufnahmeelement die auftretenden Kräfte an den Achskörper weitergeben.

Bevorzugt sind die Längslenkereinheit und/oder das Aufnahmeelement zumindest teilweise aus Federstahl ausgebildet. Hierdurch kann eine sowohl mechanisch hoch belastbare Längslenkereinheit und/oder ein Aufnahmeelement erreicht werden, wobei gleichzeitig eine hohe Duktilität sichergestellt werden kann.

Ein weiterer Aspekt der vorliegenden Erfindung betrifft einen Achskörper zum Festlegen an einer Längslenkereinheit, insbesondere an einer zuvor beschriebenen Längslenkereinheit, insbesondere für Nutzfahrzeuge, wobei der Achskörper einen Längsabschnitt aufweist und senkrecht zu seiner Längsachse X einen Querschnittsumriss bzw. -umfang in Form eines Vielecks, insbesondere in Form eines Bogenvielecks oder Gleichdicks, mit gekrümmten Kantenbereichen aufweist. Vorliegend ist mit Querschnittsumriss der Umriss des Achskörpers senkrecht zu der Längsachse gemeint. Vorschlagsgemäß weist der Achskörper folglich senkrecht zu seiner Längsachse eine Querschnittsfläche, also einen Umriss, in Form eines Vieleckes, insbesondere eines Bogenvielecks oder Gleichdicks, auf. Der Achskörper als solcher ist bevorzugt als Hohlkörper ausgebildet. Es ist ferner denkbar den Achsköper wenigstens teilweise oder auch vollständig nicht als Hohlkörper auszubilden, insbesondere als Massivkörper.

Bevorzugt weist das Vieleck n Ecken auf, wobei n eine endliche, ungerade natürliche Zahl größer oder gleich 3 ist, insbesondere ist n= 3, 5, 7, 9. Die Querschnittsfläche bzw. der Umriss des Achskörpers ist bevorzugt als ein Reuleaux-Polygon, besonders bevorzugt als ein Reuleaux-Dreieck, ausgebildet. Das Reuleaux-Dreieck weist beispielsweise den kleinsten Flächeninhalt auf, während ein Kreis, für den n gegen unendlich gilt, den größten Flächeninhalt aufweist. Eine Querschnittsfläche in Form eines Kreises ist von der vorliegenden Lehre jedoch nicht umfasst und damit ausgeschlossen. Mit steigendem n steigt somit der Flächeninhalt von Reuleaux-Polygon zu Reuleaux-Polygon an, wobei für n gegen Unendlich der Flächeninhalt eines Kreises, also πr², erreicht wird. Durch die Verwendung eines Bogenvielecks oder Gleichdicks mit endlichem n, bevorzugt n=3, kann folglich Material eingespart werden.

Weiter bevorzugt weist das Vieleck abgerundete Ecken, insbesondere in Form von Kreisbögen, aufweist. Bei einem Vieleck, insbesondere Bogenvieleck oder Gleichdick, mit abgerundeten Ecken sind folglich die Ecken ebenfalls als Kreisbögen ausgestaltet. Hierdurch kann sowohl der Formschluss als auch die Momentenverteilung noch besser erreicht werden. Darüber hinaus weist diese Maßnahme auch noch eine Reduktion der Kerbwirkungsfaktoren auf, sodass auch hohe dynamische Lasten sicher übertragen werden können.

Bevorzugt weisen die gekrümmten Kantenbereiche des Achskörpers einen Radius r_{Kante} und die abgerundeten Ecken des Achskörpers einen Radius r_{Ecke} auf, wobei r_{Ecke} < r_{Kante} gilt, insbesondere r_{Kante} 5-100 mal, vorzugsweise 10 - 30 mal, größer als r_{Ecke} ist. Mit den abgerundeten Ecken wird beim Montieren und nach der Montage verhindert, dass der Anbindungsbereich oder der Aufnahmebereich durch scharfe Ecken langfristig beschädigt wird. Die abgerundeten Kantenbereiche können hingegen in die jeweilige Kontur der Anbindungsbereiche, beispielsweise in den Bogen und den Doppelbogen, eingeführt werden, welche insbesondere als eine Hinterschneidung für den Achskörper ausgelegt ist oder sind. Bei einer Ausgestaltung mit r_{Kante} 5-100 mal r_{Ecke} wird unter anderem eine Vereinfachung der Montage erreicht. Bei einer Ausgestaltung bei der r_{Kante} 10-30 mal größer als r_{Ecke} ist, wird eine besonders homogene Spannungsverteilung erreicht, sodass unter andrem ein besonders leichter Achskörper erreicht werden kann, welcher auch einfach herzustellen ist.

Ein weiterer Aspekt betrifft eine Achsanbindung mit einer Längslenkereinheit und Aufnahmeeinheit, insbesondere wie diese zuvor beschrieben wurden, und einem Achskörper, wie dieser zuvor beschrieben wurde. Durch Zusammenwirken der beschriebenen Längslenkereinheit mit Aufnahmeeinheit und mit dem beschriebenen Achskörper wird eine Achsanbindung bereit gestellt, wobei jeweils zwei aufnahmeseitige und zwei lenkerseitige Befestigungsbereiche vorgesehen sind, welche im montierten Zustand den Achskörper in einer Richtung senkrecht zu seiner Längsachse X vor und hinter dem Achskörper festlegen. Insbesondere ist der beschriebene Achskörper formschlüssig an der Längslenkereinheit im montierten Zustand festgelegt, wodurch eine gleichmäßigere Momentenverteilung von der Längslenkereinheit auf den Achskörper erfolgt.

Bevorzugt weist die Achsanbindung mindestens zwei Befestigungsmittel auf, welche im montierten Zustand in je einem Befestigungsbereich vor und hinter dem Achskörper angeordnet sind, wobei insbesondere mindestens ein aufnahmeseitiger und ein lenkerseitige Befestigungsbereich im montierten Zustand aneinander greifen oder benachbart zueinander sind. Das Befestigungsmittel kann als U-Bügel, oder als Schraubverbindung oder als Hakenverbindung oder dergleichen ausgebildet sein, insbesondere ist das Befestigungsmittel als wieder lösbares oder justierbares Befestigungsmittel ausgebildet.

Die vorgeschlagene Achsanbindung insbesondere für Nutzfahrzeuge, welche die Längslenkereinehit und ein Aufnahmeelement umfasst, wird nachfolgend im Detail durch das Zusammenwirken der Längslenkereinheit und des Achskörpers beschrieben. Die Längslenkereinheit weist dabei einen gekrümmten lenkerseitigen Anbindungsbereich und, an den lenkerseitigen Anbindungsbereich grenzend, einen lenkerseitigen Befestigungsbereich auf. Ferner weist das Aufnahmeelement einen gekrümmten aufnahmeseitigen Anbindungsbereich, welcher dem längslenkerseitigen Anbindungsbereich gegenüberliegend angeordnet ist, und einen aufnahmeseitigen Befestigungsbereich auf. Ferner ist ein Befestigungsmittel vorgesehen, welches in je einem lenkerseitigen und einem gegenüberliegenden aufnahmeseitigen Befestigungsbereich eingreift und diese wenigstens teilweise im montierten Zustand aneinander festlegt, um einen Achskörper an der Achsanbindung festzulegen. Vorschlagsgemäß weist der Achskörper senkrecht zu seiner Längsachse einen Querschnittsumrisse in Form eines Vieleckes, wie beispielsweise einem Gleichdick oder Bogenvieleck, auf, und der aufnahmeseitige und der längslenkerseitige Anbindungsbereich sind jeweils teilweise komplementär zu einer Kontur des Umrisses des Achskörpers ausgebildet, um den Achskörper formschlüssig an der Achsanbindung festzulegen. In anderen Worten kann die Festlegung des Achskörpers somit wie eine Polygon-Wellen-Naben-Verbindung ausgestaltet sein. Durch diese Ausgestaltung können auch hohe Drehmomente sicherübertragen werden. Eine gegenüber dem Stand der Technik geänderte Geometrie des Achskörpers ermöglicht folglich eine Fixierung der Achse durch Formschluss an der vorgeschlagenen Längslenkereinheit. Vorschlagsgemäß weist der Achskörper entlang seiner Längsachse eine Querschnittsfläche auf, welche als Vieleck oder Bogenvieleck oder als Gleichdick ausgebildet ist. Unter einem Gleichdick kann unter anderem eine Kurve konstanter Breite verstanden werden, deren geschlossene Linie in jeder Lage innerhalb eines geeigneten Quadrates stets alle vier Seiten berührt. Ein gleichseitiges Dreieck mit Kreissegmenten anstelle der geraden Schenkel ist beispielsweise das einfachste aller Gleichdicke und wird beispielsweise auch Reuleaux-Dreieck genannt. Ein weiterer Vorteil der geänderten Geometrie des Achskörpers ist darin zu sehen, dass die an der Achsanbindung auftretenden Momente auf eine größere Fläche des Achskörpers verteilt werden können, wodurch die Belastung des Achskörpers reduziert wird. Das vorgeschlagene Vieleck oder Bogenvieleck oder Gleichdick weisen eine ungerade Anzahl an Ecken auf. Bevorzugt weist das Gleichdick oder Bogenvieleck n Ecken auf, wobei n eine endliche, ungerade natürliche Zahl größer oder gleich 3 ist, insbesondere ist n gleich 3, 5, 7, 9. Weiter bevorzugt weist das Gleichdick oder Bogenvieleck abgerundete Ecken, insbesondere in Form von Kreisbögen, auf.

Bevorzugt sind die Kontur des aufnahmeseitigen Anbindungsbereichs und die Kontur des lenkerseitigen Anbindungsbereichs zum formschlüssigen Aufnehmen des Achskörpers unterschiedlich ausgebildet. Das Unterschiedlich-Ausgebildetsein der beiden Konturen der zwei Anbindungsbereiche bedeutet vorliegend, dass die beiden Konturen entsprechend komplementär zu der Kontur der Querschnittsfläche des verwendeten Gleichdicks oder Bogenvieleck ausgeformt sind, an welchen sie festgelegt sind oder werden. Die Kontur des aufnahmeseitigen Anwendungsbereichs und die Kontur des längslenkerseitigen Anbindungsbereichs können somit, insbesondere im montierten Zustand, zur formschlüssigen Anlage an einen Umriss des Achskörpers gebracht werden.

Besonders bevorzugt ist der lenkerseitige Anbindungsbereich oder der aufnahmeseitige Anbindungsbereich bogenförmig ausgebildet, während der aufnahmeseitige Anbindungsbereich oder der längslenkerseitige Anbindungsbereich entsprechend V-förmig, insbesondere als gebogenes V bzw. als Doppelbogen, zur formschlüssigen Aufnahme des Achskörpers zwischen den beiden Anbindungsbereichen ausgebildet ist. Besonders bevorzugt sind die lenkerseitigen und aufnahmeseitigen Anbindungsbereiche in Hinblick auf Verwendung eines Achskörpers mit einer Querschnittsfläche in Form eines Reuleaux-Dreiecks ausgebildet. Es versteht sich, dass bei Verwendung eines Reuleaux-Polygons oder eines anderen Vielecks mit n Ecken, wobei n bevorzugt 5,7,9 ist, der lenkerseitge Anbindungsbereich und der aufnahmeseitige Anbindungsbereich entsprechend der Kontur des anzubindenen Reuleaux-Polygons bzw. des Vielecks angepasst ausgebildet sind. Dies bedeutet, dass der lenkerseitige Anbindungsbereich und der aufnahmeseitige Anbindungsbereich insgesamt n-2 bis n Bögen aufweisen. Die n-2 bis n Bögen sind also auf den lenkerseitigen Anbindungsbereich und den aufnahmeseitigen Anbindungsbereich verteilt angeordnet. Die Ausbildung des lenkerseitigen Anbindungsbereichs und des aufnahmeseitigen Anbindungsbereichs mit einer zu der Anzahl der n Ecken des verwendeten Vielecks oder Bogenvielecks oder Gleichdicks korrespondierenden Anzahl an Bögen erlaubt eine formschlüssige Aufnahme des Achskörpers zwischen den beiden Anbindungsbereichen.

Bevorzugt ist der längslenkerseitige Anbindungsbereich in Bezug auf ein Koordinatensystem konvex oder konkav gekrümmt und der aufnahmeseitige Anbindungsbereich ist in Bezug auf das Koordinatensystem entsprechend konkav oder konvex gekrümmt ausgebildet. Durch die konvexe bzw. konkave Ausbildung der beiden Anbindungsbereiche kann folglich der Achskörper formschlüssig zwischen den beiden Anbindungsbereichen aufgenommen werden.

Ferner bevorzugt sind jeweils zwei aufnahmeseitige und zwei längslenkerseitige Befestigungsbereiche vorgesehen, welche im montierten Zustand den Achskörper im Wesentlichen senkrecht zu seiner Längsachse X auf gegenüberliegenden Seiten der Umrissfläche umgeben, d.h. vor und hinter dem Umriss des Achskörpers. Ferner sind im montierten Zustand ein aufnahmeseitiger Befestigungsbereich und ein lenkerseitiger Befestigungsbereich auf einer Seite, d.h. vor und/oder nach dem Achskörper, des Umrisses gegenüberliegend angeordnet. Im montierten Zustand grenzen die Längslenkereinheit und das Aufnahmeelement in den beiden Befestigungsbereichen aneinander. Hierdurch kann der Achskörper formschlüssig zwischen der Längslenkereinheit, welches mindesten ein Längslenkerelement umfasst, und dem Aufnahmeelement aufgenommen werden.

Die Achsanbindung weist mindestens zwei Befestigungsmittel auf, welche im montierten Zustand in je einem Befestigungsbereich angeordnet sind, insbesondere greifen mindestens ein aufnahmeseitiger und ein lenkerseitiger Befestigungsbereich im montierten Zustand aneinander. Durch die Befestigungsmittel können folglich die Längslenkereinheit und das Aufnahmeelement mit dem Achskörper verbunden werden, so dass der Achskörper zwischen der Längslenkereinheit und dem Aufnahmeelement formschlüssig festgelegt ist. Die beiden Befestigungsmittel können dabei als Mutter-Schraubverbindung oder als U-Bügel oder als Hakenverbindung oder als Bolzenverbindung oder als eine andere bekannte Verbindung vorgesehen sein.

Bevorzugt weist die Längslenkereinheit ein Längslenkerelement auf, welches einteilig oder mehrteilig, insbesondere zweiteilig, ausgebildet ist, wobei bei einer zweiteiligen Ausbildung Verbindungsmittel, insbesondere eine Bolzenverbindung oder eine U-Bügelverbindung oder eine Hakenverbindung, die beiden Längslenkerelemente miteinander verbindet. Eine Verbindung der zwei- oder mehrteiligen Ausführungsform des Längslenkereinheit ermöglicht eine flexible Umschließung des Achskörpers. Bei einer zweiteiligen Ausbildung des Lenkerelementes können dann beispielsweise unterschiedliche Achskörper, insbesondere mit n=3, oder n=5 etc, mit unterschiedlichen Querschnittsflächen bzw. Umrissen formschlüssig zwischen der Längslenkereinheit und dem Aufnahmeelement angeordnet werden. Die Fixierung des Achskörpers zwischen dem Längslenkerelement und dem Aufnahmeelement erfolgt mittels der Befestigungsmittel in den Befestigungsbereichen.

Weitere Vorteile und Merkmale der Erfindung ergeben sich aus der nachfolgenden Beschreibung bevorzugter Ausführungsformen der erfindungsgemäßen Achsanbindung mit Bezug auf die beigefügten Figuren. Einzelne Merkmale der verschiedenen Ausführungsformen können dabei im Rahmen der Erfindung miteinander kombiniert werden. Es zeigen:
Fig. 1a-c eine Achsanbindung in Seitenansicht (Figur 1a), in Draufsicht (Figur 1b) und in perspektivischer Ansicht (Figur 1c);
Fig. 2 eine erfindungsgemäße Achsanbindung in Seitenansicht (Figur 2a), in Draufsicht (Figur 2b) und in perspektivischer Ansicht (Figur 2c);
Fig. 3 eine weitere erfindungsgemäße Achsanbindung in Seitenansicht (Figur 3a), in Draufsicht (Figur 3b) und in perspektivischer Ansicht (Figur 3c).

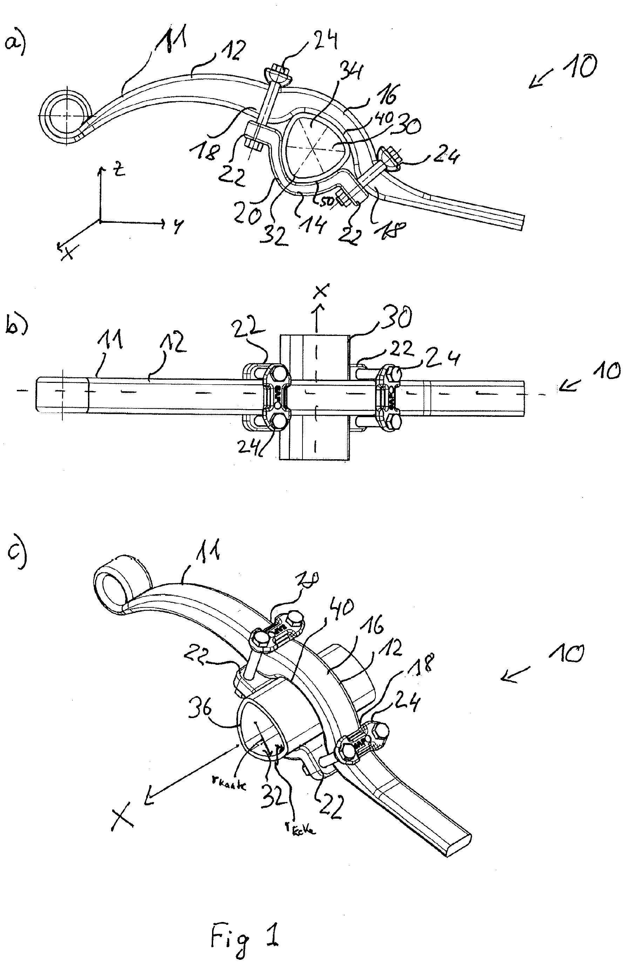

Figuren 1a bis c zeigen eine nicht erfindungsgemäße Längslenkereinheit (11) und einen Achskörper 30, welche als Achsanbindung 10 für ein Nutzfahrzeug zusammenwirken. Die Achsanbindung 10 ist in Figur 1a in Seitenansicht, in Figur 1b in einer Draufsicht und in Figur 1c in perspektivischer Ansicht dargestellt. Die Achsanbindung 10 gemäß den Figuren 1a bis c umfasst ein Längslenkerelement 12 und ein Aufnahmeelement 14. Das Längslenkerelement 12 weist einen gekrümmten lenkerseitigen Anbindungsbereich 16 auf. An den lenkerseitigen Anbindungsbereich 16 grenzt ein lenkerseitiger Befestigungsbereich 18. Analog weist das Aufnahmeelement 14 einen gekrümmten aufnahmeseitigen Anbindungsbereich 20 auf, an welchem ein aufnahmeseitiger Befestigungsbereich 22 angrenzt. Ferner weist die Achsanbindung 10 ein Befestigungselement 24 auf, welches je in einem lenkerseitigen und in einem gegenüberliegenden aufnahmeseitigen Befestigungsbereich 18, 24 eingreift. Im montierten Zustand zwingt das Befestigungselement 24 den längslenkerseitigen und den aufnahmeseitigen Befestigungsbereich 18, 24 gegeneinander, um einen Achskörper 30 an der Achsanbindung 10 festzulegen. Der Achskörper 30 weist senkrecht zu seiner Längsachsen X eine einen Umriss 32 in Form eines Vielecks 34 auf, insbesondere in Form eines Gleichdicks oder Bogenvielecks 34. Das Vieleck bzw. das Bogenvieleck oder Gleichdick 34 weist eine geschlossene Kontur 36 auf, welche den Umriss 32 bildet. Das Längslenkerelement 12 und das Aufnahmeelement 14 weisen jeweils ebenfalls eine Kontur 40, 50 auf, welche ein formschlüssiges Anlegen des Achskörpers 30 an der Achsanbindung 10 erlauben. Dies bedeutet, dass die Kontur 40 der Längslenkereinheit 11 komplementär zu einem Teil der Kontur 36 des Umrisses 32 des Achskörpers 30 ausgebildet ist, während die Aufnahmekontur 50 komplementär zu einem anderen Teil der Kontur 36 des Umrisses 32 des Achskörpers 30 ausgebildet ist.

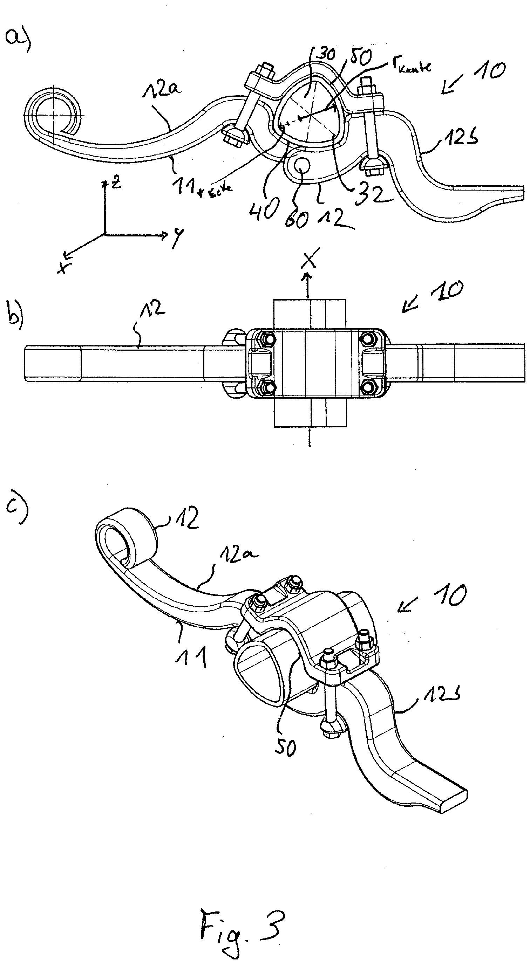

Die zwei aufnahmeseitigen und die zwei lenkerseitigen Befestigungsbereiche 18, 22 sind im montierten Zustand auf gegenüberliegenden Seiten derart angeordnet, dass sie wenigsten teilweise aneinander grenzen. Bei der Montage werden in jedem Befestigungsbereich mindestens ein Befestigungsmittel 24, bevorzugt zwei Befestigungsmittel 24 in je einem Befestigungsbereich 18, 22 angeordnet, so dass mindestens ein aufnahmeseitiger und mindestens ein lenkerseitiger Befestigungsbereich 18, 22 im montierten Zustand aneinandergrenzen. Bevorzugt grenzen beide Befestigungsbereiche 18, 24 auf den gegenüberliegenden Seiten aneinander. Es ist jedoch auch denkbar, wie in Figur 3b beispielsweise dargestellt, dass tatsächlich nur ein aufnahmeseitiger und ein längslenkerseitiger Befestigungsbereich 18, 24 im montierten Zustand aneinandergrenzen, während ein anderer aufnahmeseitiger und ein lenkerseitiger Befestigungsbereich 18, 24 beabstandet sind. Die Befestigungsmittel 24 sind als Mutter-Schraub-Verbindung ausgebildet. Eine solche Mutter-Schraub-Verbindung erlaubt es, das Längslenkerelement 12 und das Aufnahmeelement 14 formschlüssig an den Achskörper 30 anzuschmieden. Hierdurch entsteht eine feste Verbindung zwischen dem Längslenkerelement 12, dem Aufnahmeelement 14 und dem Achskörper 30, welche wieder lösbar und bei Bedarf justierbar ausgebildet ist. Es ist ferner denkbar, das Befestigungsmittel 24 als eine andere aus dem Stand der Technik bekannte Verbindung auszubilden, wie beispielsweise eine Bolzenverbindung , eine Hakenverbindung, die ineinander greift, eine U-Bügelverbindung oder dergleichen. Im Montierten Zustand des Befestigungsmittels 24 wirkt eine aufgebrachte Kraft des lenkerseitigen Anbindungsbereiches 20 im Wesentlichen senkrecht zu einem Krümmungsradius des lenkerseitigen Anbindungsbereiches 20.

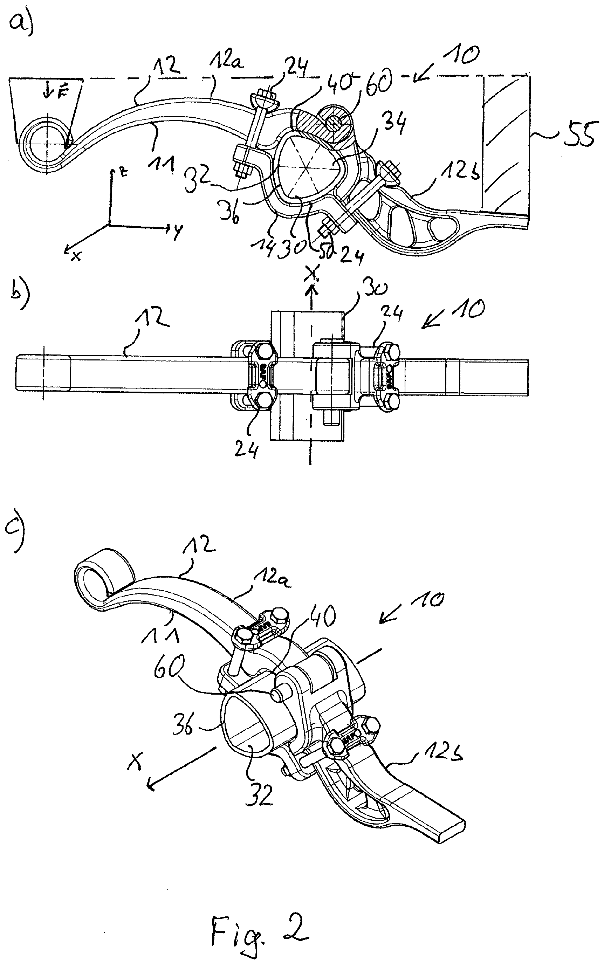

Während die Figuren 1a bis c eine Längslenkereinheit 11 zeigen, welche als einteiliges Längslenkerelement 12 ausgebildet ist, zeigen die Figuren 2a bis c und 3a bis c jeweils ein findungsgemäß zweiteiliges Längslenkerelement 12a, 12b. Bei der zweiteiligen Ausbildung des Lenkerelementes 12a, 12b ist das Längslenkelement 12a bevorzugt aus einem Federstahl ausgebildet. Das Lenkelement 12b hinter dem Achskörper 30 kann beispielsweise aus einem anderen Material gefertigt sein. Insbesondere können zur Befestigung eines Luftfederbalges 55 verschiedene Varianten vorgesehen sein, worauf nicht weiter im Detail eingegangen wird. Die Verbindung des zweiteiligen Längslenkerelementes 12a und 12b erfolgt wie in Fig. 2 gezeigt durch eine Bolzenverbindung 60. Bei einer zweiteiligen Ausführung des Längslenkerelementes 12a, 12b kann bei einer Montage der Achsanbindung 10 also zunächst die Längslenkereinheit 11 mit ihren Lenkerelementen 12a und 12b der Kontur 36 des Achskörpers 30 angepasst werden, so dass das Längslenkerelement 12a, 12b in seiner Gesamtheit eine Längslenkerkontur 40, also eine Kontur 40 des längslenkerseitigen Anbindungsbereichs, aufweist, welche eine formschlüssige Anbindung an den Achskörper 30 erlaubt. Die Längslenkereinheit weist beispielsweise eine Hinterschneidung für den Achskörper 30 auf, welche den Achskörper 30 hält. Anschließend daran kann das Aufnahmeelement 14 an den Achskörper 30 herangeführt werden. Eine anschließende Fixierung des Längslenkerelementes 12a, 12b und des Aufnahmeelementes 14 erfolgt dann mittels der Anordnung der Befestigungsmittel 24 in den Befestigungsbereichen 22, 18, wie dies auch bei einer einteiligen Ausführungsform des Längslenkerelementes 12 möglich ist. Durch das formschlüssige Festlegen der Längslenkereinheit 11 und des Aufnahmeelementes 14 sowie des Achskörpers 30 können auftretende Momente gleichmäßiger von der Längslenkereinheit 11 auf die Fläche des Achskörper verteilt werden, wodurch die Belastung des Achskörpers 30 reduziert wird. Ein Unterschied zwischen den Figuren 2a und 3a ist, dass der Achskörper 30 in der Figur 2a auf dem Ausnahmeelement 14 lagert, während der Achskörper 30 gemäß Figur 3a auf dem Längslenkerelement 12, insbesondere am Übergang zwischen dem Längslenkerelement 12a und dem Längslenkerelement 12b lagert, wobei die Längslenkerelemente 12a und 12b mittels einem Verbindungsmittel 60, wie einer Bolzenverbindung, miteinander verbunden sind. Das Verbindungsmittel 60 kann ferner als Hackenverbindung, oder Schaubverbindung oder U-Bügelverbindung oder als eine andere bekannte Verbindung ausgebildet sein.

Das Verbindungsmittel 60 ist im Wesentlichen derart angeordnet, dass das Verbindungsmittel 60 an einer flächiger Kontur 36 des Umrisses 32 anliegt, d.h. nicht an einer abgerundeten Ecke der Kontur 36 des Achskörpers 32. Gemäß der Figur 3a ist in Bezug auf das Koordinatensystem XYZ der Achskörper 30 parallel zur Y-Richtung also auf dem Längslenkerelement 12 angeordnet. Gemäß Figur 2a ist der Achskörper 30 parallel zur Y-Richtung auf dem Aufnahmeelement 14 angeordnet. In beiden Figuren 2a und 3b ist das Verbindungsmittel 60 jeweils an dem nicht-eckigen Bereich des Umrisses 32 angeordnet.

Die Figuren 1a bis 3c zeigen jeweils einen Achskörper 30, welcher eine Umriss 32 in Form eines reuleaux'schen Dreiecks zeigt. Das reuleaux'sche Dreieck weist drei Ecken auf, d.h. n=3. Ferner sind die Ecken des reuleaux'schen Dreiecks abgerundet ausgebildet, d.h. die Ecken selbst sind als Bögen ausgebildet. Die Konturen 40, 50 des Längslenkerelementes bzw. des Aufnahmeelementes 14 sind der Kontur des Umrisses 32 des Achskörpers 30, d.h. der Kontur 36 des Gleichdicks oder Bogenvielecks, entsprechend komplementär ausgebildet. Es ist ferner denkbar, dass der Achskörper 30 einen Umriss32 in Form eines n-Eckes aufweist, bei dem n=5,7 oder 9 ist. In einem solchen Fall sind die Konturen 40, 50 des Längslenkerelementes 12, 12a, 12b bzw. des Aufnahmeelementes 14 entsprechend angepasst, d.h. die Konturen 40, 50 weisen entsprechend eine größere Anzahl an Ecken, insbesondere abgerundete Ecken auf. Bevorzugt weisen die gekrümmten Kantenbereiche des Achskörpers einen Radius r_{Kante} und die abgerundeten Ecken des Achskörpers einen Radius r_{Ecke} auf, wobei r_{Ecke} < r_{Kante} gilt, insbesondere ist r_{Kante} 5-100 mal größer als r_{Ecke}.Wie in den Figuren 1a bis 3c gezeigt, werden bei Verwendung eines reuleaux'schen Dreiecks, also n=3, in dem Umriss 32 des Achskörpers 30 das Aufnahmeelement 14 mit einer V-förmigen Kontur 50 ausgebildet, während die Längslenkerelementkontur 40 bogenförmig ausgebildet ist.

### Bezugszeichenliste:

- 10: Achsanbindung
- 11: Längslenkereinheit
- 12: Lenkerelement
- 12a: Lenkerelement
- 12b: Lenkerelement
- 14: Aufnahmeelement
- 16: Lenkerseitiger Anbindungsbereich
- 18: Lenkerseitiger Befestigungsbereich
- 20: Aufnahmeseitiger Anbindungsbereich
- 22: Aufnahmeseitiger Befestigungsbereich
- 24: Befestigungselement
- 30: Achskörper
- 32: Umriss
- 34: Vieleck
- 36: Kontur des Umrisses
- 40: Kontur des längslenkerseitigen Anbindungsbereichs
- 50: Kontur des aufnahmeseitigen Anbindungsbereichs
- 55: Luftfederbalg
- 60: Verbindungsmittel
- X: Längsachse des Achskörpers
- Y: Y Richtung
- r_{Ecke}: Radius
- r_{Kante}: Radius

## Patentansprüche

1. Längslenkereinheit (11), insbesondere für Nutzfahrzeuge, mit einer Aufnahmeeinheit (14), wobei die Längslenkereinheit (11) einen gekrümmten lenkerseitigen Anbindungsbereich (16) und, an den lenkerseitigen Anbindungsbereich (16) grenzend, einen lenkerseitigen Befestigungsbereich (18) aufweist,
wobei die Aufnahmeeinheit (14) einen gekrümmten aufnahmeseitigen Anbindungsbereich (20), welcher in einem montierten Zustand dem lenkerseitigen Anbindungsbereich (16) gegenüberliegend angeordnet ist, und an den aufnahmeseitigen Anbindungsbereich (20) grenzend einen aufnahmeseitigen Befestigungsbereich (22) aufweist,
wobei ein Befestigungsmittel (24) vorgesehen ist, welches ausgelegt ist, in einem montierten Zustand je in einen lenkerseitigen und einen gegenüberliegenden aufnahmeseitigen Befestigungsbereich (18, 22) wenigstens teilweise, insbesondere wieder lösbar, einzugreifen,
wobei der lenkerseitige und der gegenüberliegende aufnahmeseitige Anbindungsbereich (16, 20)jeweils eine Kontur (40, 50) zum formschlüssigen Festlegen einer Achse (30) aufweisen, **dadurch gekennzeichnet, dass** die Längslenkereinheit (11) ein zweiteiliges Lenkerelement (12, 12a, 12b) umfasst,
wobei ein Verbindungsmittel (60), insbesondere eine Bolzenverbindung (60) oder eine U-Bügelverbindung oder eine Schraubverbindung oder eine Hakenverbindung oder dergleichen, die beiden Lenkerelemente (12, 12a, 12b) miteinander verbindet und ein erster Teil zu einem zweiten Teil des Lenkerelements (12, 12a, 12b) gegen eine translatorische Verlagerungsbewegung durch das Verbindungsmittel (60) gesichert ist, jedoch eine rotatorische Bewegung des ersten Teils zu dem zweiten Teil des Lenkerelements (12, 12a, 12b) relativ zu einander möglich ist.

2. Längslenkereinheit (11) nach Anspruch 1, wobei die Kontur (50) des aufnahmeseitigen Anbindungsbereichs anders als die Kontur (40) des lenkerseitigen Anbindungsbereichs ausgebildet ist.

3. Längslenkereinheit (11) nach Anspruch 2,
wobei der lenkerseitige Anbindungsbereich (16) und der aufnahmeseitige Anbindungsbereich (20) jeweils komplementär zu einem vieleckförmigen Umriss einer Achse (30) ausgebildet sind.

4. Längslenkereinheit (11) nach einem der vorhergehenden Ansprüche, wobei die Kontur (50) des aufnahmeseitigen Anbindungsbereichs und/oder die Kontur (40) des lenkerseitigen Anbindungsbereichs, insbesondere in einem montierten Zustand, ausgelegt ist/sind für eine festzulegende Achse (30) eine Hinterschneidung zu bilden.

5. Längslenkereinheit (11) nach einem der vorhergehenden Ansprüche, wobei der lenkerseitige Anbindungsbereich (16) oder der aufnahmeseitige Anbindungsbereich (20) als Bogen ausgebildet ist.

6. Längslenkereinheit (11) nach Anspruch 5, wobei der jeweils andere Anbindungsbereich (20, 16) als Doppelbogen, insbesondere als gebogenes V, insbesondere zum formschlüssigen Aufnehmen des Achskörpers (30), zwischen den beiden Anbindungsbereichen (16, 20) ausgebildet ist.

7. Längslenkereinheit (11) nach einem der vorhergehenden Ansprüche, wobei der lenkerseitige Befestigungsbereich (18) wenigstens teilweise eine geringere Breite aufweist als der im montierten Zustand gegenüberliegende aufnahmeseitige Befestigungsbereich (22), und
wobei insbesondere das Befestigungsmittel (24) in den aufnahmeseitigen Befestigungsbereich (22) eingreift und an mindestens einer Seite des lenkerseitigen Befestigungsbereichs (18) anliegt.

8. Längslenkereinheit (11) nach einem der vorhergehenden Ansprüche, wobei die Längslenkereinheit (11) und/oder das Aufnahmeelement (14) zumindest teilweise aus Federstahl ausgebildet ist/sind.

9. Achsanbindung (10) mit einer Längslenkereinheit (11) nach einem der Ansprüche 1-8 und einem Achskörper (30),
wobei der Achskörper (30) einen Längsabschnitt aufweist und senkrecht zu seiner Längsachse (X) einen Querschnittsumriss (32) in Form eines Vielecks (34), insbesondere in Form eines Bogenvielecks oder Gleichdicks, mit gekrümmten Kantenbereichen aufweist,
wobei jeweils zwei aufnahmeseitige und zwei lenkerseitige Befestigungsbereiche (18, 22) vorgesehen sind, welche im montierten Zustand den Achskörper (30) in einer Richtung senkrecht zu seiner Längsachse (X) vor und hinter dem Achskörper (30) festlegen.

10. Achsanbindung (10) nach Anspruch 9, wobei das Vieleck (34) n Ecken aufweist, wobei n eine endliche, ungerade natürliche Zahl größer oder gleich 3 ist, insbesondere ist n= 3, 5,7,9.

11. Achsanbindung (10) nach einem der Ansprüche 9 oder 10, wobei die gekrümmten Kantenbereiche einen Radius r_{Kante} und die abgerundeten Ecken einen Radius r_{Ecke} aufweisen,
wobei r_{Ecke} < r_{Kante} gilt, und
wobei insbesondere r_{Kante} 5-100 mal größer als r_{Ecke} ist.

## Claims

1. A trailing link unit (11), in particular for commercial vehicles, with a receiving unit (14), wherein the trailing link unit (11) has a curved link-side connection region (16) and, adjoining the link-side connection region (16), a link-side fastening region (18),
wherein the receiving unit (14) has a curved receiving-side connection region (20), which in an assembled state is arranged opposite the link-side connection region (16), and has a receiving-side fastening region (22) adjoining the receiving-side fastening region (20),
wherein a fastening means (24) is provided which is adapted, in a mounted state, to engage at least partially, in particular releasably, in each of a link-side and an opposite receiving-side fastening region (18, 22),
wherein the link-side and the opposite receiving-side fastening region (16, 20) each have a contour (40, 50) for the positive fixing of an axle (30),
**characterized in that**
the trailing link unit (11) comprises a two-part link element (12, 12a, 12b), wherein a connecting means (60), in particular a bolt connection (60) or a U-bolt connection or a screw connection or a hook connection or the like connects the two link elements (12, 12a, 12b) to each other and
a first part is secured to a second part of the link element (12, 12a, 12b) against a translatory displacement movement by the connecting means (60), but a rotatory movement of the first part to the second part of the steering element (12, 12a, 12b) relative to each other is possible.

2. The trailing link unit (11) according to claim 1, wherein the contour (50) of the receiving-side connection region is formed differently from the contour (40) of the link-side connection region.

3. The trailing link unit (11) according to claim 2,
wherein the link-side connection region (16) and the receiving-side connection region (20) are each formed complementary to a polygonal outline of an axle (30).

4. The trailing link unit (11) according to any one of the preceding claims, wherein the contour (50) of the receiving-side connection region and/or the contour (40) of the link-side connection region is/are designed, in particular in an assembled state, to form an undercut for an axle (30) to be fixed.

5. The trailing link unit (11) according to any one of the preceding claims, wherein the link-side connection region (16) or the receiving-side connection region (20) is designed as an arc.

6. The trailing link unit (11) according to claim 5, wherein the respective other connection region (20, 16) is formed as a double bend, in particular as a bent V, in particular for positive reception of the axle bode (30), between the two connection regions (16, 20).

7. The trailing link unit (11) according to any one of the preceding claims, wherein the link-side fastening region (18) has at least partially a smaller width than the receiving-side fastening region (22) which is opposite in the assembled state, and
wherein in particular the fastening means (24) engages in the receiving-side fastening region (22) and rests against at least one side of the link-side fastening region (18).

8. The trailing link unit (11) according to any one of the preceding claims, wherein the trailing link unit (11) and/or the receiving element (14) is/are formed at least partially from spring steel.

9. An axle connection (10) with a trailing link unit (11) according to any one of claims 1-8 and an axle body (30),
wherein the axle body (30) has a longitudinal section and, perpendicular to its longitudinal axis (X), has a cross-sectional outline (32) in the form of a polygon (34), in particular in the form of an arcuate polygon or equidistant polygon, with curved edge regions,
wherein two receiving-side fastening regions (18, 22) and two link-side fastening regions (18, 22) are provided in each case, which in the assembled state fix the axle body (30) in a direction perpendicular to its longitudinal axis (X) in front of and behind the axle body (30).

10. The axle connection (10) according to claim 9, wherein the polygon (34) has n corners, wherein n is a finite, odd natural number greater than or equal to 3, in particular n= 3, 5, 7, 9.

11. The axle connection (10) according to any one of claims 9 or 10, wherein the curved edge regions have a radius r_{edge} and the rounded corners have a radius r_{corner},
where r_{corner} < r_{edge}, and
wherein in particular r_{edge} is 5-100 times greater than r_{corner}.

## Revendications

1. Ensemble formant bras oscillant longitudinal (11), en particulier pour des véhicules utilitaires, comportant une unité de réception (14), l'ensemble formant bras oscillant longitudinal (11) présentant une zone de liaison (16) côté bras courbée et une zone de fixation (18) côté bras adjacente à la zone de liaison (16) côté bras,
dans lequel
l'unité de réception (14) présente une zone de liaison (20) côté réception courbée qui, à l'état monté, est disposée à l'opposé de la zone de liaison (16) côté bras, et une zone de fixation (22) côté réception adjacente à la zone de liaison (20) côté réception,
il est prévu un moyen de fixation (24) qui est conçu pour s'engager, à l'état monté, au moins partiellement, en particulier de façon amovible, dans une zone de fixation côté bras et dans une zone de fixation côté réception opposée respectives (18, 22),
les zones de liaison (16, 20) côté bras et côté réception opposée présentent chacune un contour (40, 50) pour immobiliser par coopération de forme un essieu (30),
**caractérisé en ce que**
l'ensemble formant bras oscillant longitudinal (11) comprend un élément formant bras (12, 12a, 12b) en deux parties,
un moyen de jonction (60), en particulier une jonction à goujon (60) ou une jonction à étrier en U ou une jonction vissée ou une jonction à crochet ou similaire, relie les deux éléments formant bras (12, 12a, 12b) l'un à l'autre, et
une première partie est bloquée par rapport à une seconde partie de l'élément formant bras (12, 12a, 12b) à l'encontre d'un mouvement de déplacement en translation par le moyen de jonction (60), mais un mouvement en rotation de la première partie par rapport à la seconde partie de l'élément formant bras (12, 12a, 12b) l'une par rapport à l'autre est possible.

2. Ensemble formant bras oscillant longitudinal (11) selon la revendication 1,
dans lequel
le contour (50) de la zone de liaison côté réception est réalisé différemment du contour (40) de la zone de liaison côté bras.

3. Ensemble formant bras oscillant longitudinal (11) selon la revendication 2,
dans lequel
la zone de liaison (16) côté bras et la zone de liaison (20) côté réception sont réalisées chacune de façon complémentaire à un contour polygonal d'un essieu (30).

4. Ensemble formant bras oscillant longitudinal (11) selon l'une des revendications précédentes,
dans lequel
le contour (50) de la zone de liaison côté réception et/ou le contour (40) de la zone de liaison côté bras est/sont conçu(s), en particulier à l'état monté, pour former une contre-dépouille pour un essieu (30) à immobiliser.

5. Ensemble formant bras oscillant longitudinal (11) selon l'une des revendications précédentes,
dans lequel
la zone de liaison (16) côté bras ou la zone de liaison (20) côté réception est réalisée sous forme d'arc.

6. Ensemble formant bras oscillant longitudinal (11) selon la revendication 5,
dans lequel
l'autre zone de liaison (20, 16) respective est réalisée sous forme d'arc double, en particulier sous forme de V courbée, en particulier pour recevoir par coopération de forme le corps d'essieu (30) entre les deux zones de liaison (16, 20).

7. Ensemble formant bras oscillant longitudinal (11) selon l'une des revendications précédentes,
dans lequel
la zone de fixation (18) côté bras présente au moins partiellement une largeur inférieure à celle de la zone de fixation (22) côté réception opposée à l'état monté, et
en particulier le moyen de fixation (24) s'engage dans la zone de fixation (22) côté réception et s'appuie contre au moins un côté de la zone de fixation (18) côté bras.

8. Ensemble formant bras oscillant longitudinal (11) selon l'une des revendications précédentes,
dans lequel
l'ensemble formant bras oscillant longitudinal (11) et/ou l'élément de réception (14) est/sont réalisé(s) au moins partiellement en acier à ressort.

9. Dispositif de liaison d'essieu (10) comportant un ensemble formant bras oscillant longitudinal (11) selon l'une des revendications 1 à 8 et un corps d'essieu (30),
dans lequel
le corps d'essieu (30) présente une portion longitudinale et présente, perpendiculairement à son axe longitudinal (X), un contour en section transversale (32) sous la forme d'un polygone (34), en particulier sous la forme d'un polygone arqué ou d'un orbiforme, ayant des zones de bord courbées,
il est prévu deux zones de fixation côté réception et deux zones de fixation côté bras (18, 22) respectives, qui, à l'état monté, immobilisent le corps d'essieu (30) dans une direction perpendiculaire à son axe longitudinal (X) devant et derrière le corps d'essieu (30).

10. Dispositif de liaison d'essieu (10) selon la revendication 9,
dans lequel
le polygone (34) présente n coins, n étant un nombre naturel fini impair supérieur ou égal à 3, en particulier n = 3, 5, 7, 9.

11. Dispositif de liaison d'essieu (30) selon l'une des revendications 9 ou 10,
dans lequel
les zones de bord courbées présentent un rayon r_{bord}, et les coins arrondis présentent un rayon r_{coin},
où r_{coin} < r_{bord}, et
en particulier r_{bord} est 5 à 100 fois plus grand que r_{coin}.
